# FASCICULE DE BREVET EUROPEEN

(11) **EP 0 703 191 B1**
(45) Date de publication et mention de la délivrance du brevet: **17.05.2000**
(21) Numéro de dépôt: 95202481.8
(22) Date de dépôt: 13.09.1995
(51) Int. Cl.: C01B 15/10, C01B 15/00, B01J 2/00

(54) **Procédé pour la fabrication de particules de persels enrobés**
Verfahren zur Herstellung beschichteter Persalzteilchen
Process for the production of coated persalt particles

(30) Priorité: 22.09.1994 IT MI941927
(43) Date de publication de la demande: 27.03.1996
(73) Titulaire: SOLVAY INTEROX (Société Anonyme), B-1050 Bruxelles (BE)
(72) Inventeur: Bigini, Stefano, I-Terni (IT); Pardini, Romano, I-Rosignano-Solvay (IT); Parvaneh, Soraya, I-Livorno (IT)
(74) Mandataire: Decamps, Alain René François

(56) Documents cités:
- EP-A- 0 592 969
- GB-A- 1 553 505

## Description

L'invention concerne un procédé pour la fabrication de particules solides de persels enrobés tel que indiqué dans la revendication 1.

Les particules solides de persels enrobés obtenues par le procédé sont utilisées dans divers types d'industrie comme support d'oxygène actif à l'état solide et, en particulier, dans l'industrie de la détergence.

On connaît depuis longtemps des procédés de fabrication de percarbonates enrobés par vaporisation d'une solution de la composition d'enrobage sur les particules solides de persel et séchage subséquent du produit enrobé (EP-A1-459625).

Une autre technique connue consiste à mélanger dans un malaxeur le percarbonate préalablement séché avec une solution aqueuse de l'agent d'enrobage (borate) et à sécher ensuite le mélange obtenu (EP-0487256).

Ces procédés connus présentent cependant le désavantage de nécessiter une installation industrielle complexe comprenant un atelier d'enrobage qui comporte, outre le malaxeur ou le vaporisateur, ses propres unités de séchage, indépendantes des unités de séchage du persel non enrobé.

L'invention remédie aux inconvénients des procédés connus en fournissant un procédé qui permet d'obtenir, dans des conditions économiques, des particules de persels stables et de distribution granulométrique serrée au moyen d'un procédé continu ne nécessitant pas d'installations industrielles complexes comportant plusieurs unités de séchage.

A cet effet, l'invention concerne un procédé continu pour la fabrication de particules solides d'au moins un persel d'au moins un métal alcalin enrobées par recouvrement du persel avec une composition d'enrobage selon lequel, dans une première étape, on fait cristalliser en continu une solution aqueuse sursaturée de persel par toute technique connue, on soumet, dans une étape finale, les particules cristallines obtenues à une centrifugation et à un séchage, on intercale entre l'étape de cristallisation et l'étape de centrifugation une étape d'enrobage dans laquelle on transfère dans une cuve agitée, appelée cuve de post-cristallisation, une suspension des particules de persel provenant de l'étape de cristallisation, on introduit dans ladite cuve de post-cristallisation au moins un agent d'enrobage et on réalise une cristallisation dudit agent d'enrobage à la surface des particules de persel dans des conditions réglées de température et d'agitation.

Par persel on entend désigner tout composé inorganique solide dans les conditions normales de température et de pression qui libère, lorsqu'on le met en solution dans l'eau, du peroxyde d'hydrogène et un sel d'un acide inorganique. Des exemples de persels conformes au procédé selon l'invention sont les perborates, les phosphates peroxyhydratés et les carbonates peroxyhydratés.

Le procédé conforme à l'invention s'adresse en particulier à la fabrication de particules solides de perborates ou de carbonates peroxyhydratés de métaux alcalins enrobés. Il a donné d'excellents résultats pour la fabrication de carbonates peroxyhydratés de métaux alcalins enrobés.

Le procédé est applicable pour la fabrication de persels de tout métal alcalin enrobés. Il convient bien pour la fabrication de persels de sodium ou de potassium enrobés. Il a donné d'excellents résultats pour la fabrication de persels de sodium enrobés.

Le procédé selon l'invention convient tout spécialement pour la fabrication du carbonate peroxyhydraté de sodium enrobé, de formule 2Na₂CO₃.3H₂O₂, communément appelé percarbonate de sodium.

Le procédé est aussi utilisable pour la fabrication d'un mélange de plusieurs persels enrobés, par exemple d'un mélange de perborate et de carbonate peroxyhydraté de métaux alcalins enrobés. Il peut aussi être utilisé pour la fabrication d'un mélange de persels de différents métaux alcalins enrobés, tels que, par exemple, de persels de sodium et de potassium enrobés.

Par composition d'enrobage on entend désigner une composition apte à être utilisée pour enrober les particules de persels, c'est-à-dire les recouvrir d'une couche la plus uniforme possible d'une composition qui les isole du monde extérieur.

Selon l'invention, le procédé s'effectue en plusieurs étapes. Dans une première étape, on prépare les particules de persels par cristallisation en continu d'une solution aqueuse sursaturée dudit persel. Cette étape de cristallisation peut s'effectuer dans des cristalliseurs de type les plus variés. Les cristalliseurs utilisés traditionnellement dans l'industrie chimique et pharmaceutique conviennent généralement bien. Des exemples de tels cristalliseurs sont donnés dans l'ouvrage de Perry H. et Green D.W. "Perry's Chemical Engineers' Handbook" 6th Edition McGraw-Hill, New-York, 1984, pages 19-24 à 19-40.

Il est aussi possible, en variante, d'utiliser des cristalliseurs-classificateurs, c'est-à-dire des cristalliseurs qui réalisent aussi le classement des particules formées afin de réduire l'étalement de leur distribution granulométrique.

Selon l'invention, les particules de persels sont, dans une étape finale, soumises à centrifugation afin d'éliminer par essorage la majeure partie des eauxmères de cristallisation. Cette opération s'effectue dans des centrifugeuses industrielles du type courant employé dans l'industrie chimique et pharmaceutique.

Les particules centrifugées sont ensuite séchées dans un appareillage approprié. Tout type de sécheur industriel compatible avec le séchage des particules de persels dans des conditions propres à maintenir la stabilité de l'oxygène actif qu'ils contiennent peut être employé. Parmi les sécheurs qui conviennent, les sécheurs à air chaud donnent généralement satisfaction. Des sécheurs à lit fluidisé de particules dans un courant d'air chaud donnent de bons résultats.

Selon l'invention, on intercale l'étape d'enrobage des particules de persels entre les étapes de cristallisation et de centrifugation.

Conformément à l'invention, on réalise l'enrobage des particules de persels en transférant la suspension des particules quittant le cristalliseur dans une cuve agitée dans laquelle on réalise une cristallisation complémentaire, appelée "post-cristallisation" de la composition d'enrobage autour des particules de persels.

Par cuve agitée, on entend désigner une cuve munie d'un agitateur capable d'homogénéiser la suspension aqueuse des particules de persels. Tous les types d'agitateurs peuvent être indifféremment envisagés, à la condition qu'ils ne produisent pas un effort de cisaillement trop important qui conduirait à briser les particules de persels. En pratique, les agitateurs rotatifs ont donné satisfaction. Parmi ces derniers, les agitateurs rotatifs à pales solidaires d'un axe central entraîné par un moteur dont il est possible de régler la vitesse se sont avérés bien adaptés.

Selon l'invention, on introduit dans la cuve de post-cristallisation au moins un agent d'enrobage. L'agent d'enrobage peut indifféremment être introduit sous la forme d'une solution aqueuse concentrée ou sous la forme de particules solides.

Par solution concentrée, on entend désigner une solution légèrement sursaturée dans les conditions de température et de pression régnant dans la cuve de post-cristallisation.

Selon l'invention, on peut utiliser des agents d'enrobage de types divers. Les agents d'enrobage utilisés jusqu'ici pour enrober les persels peuvent être mis en oeuvre dans le procédé conforme à l'invention. Il est aussi possible d'utiliser un mélange de plusieurs agents d'enrobage différents.

Avantageusement, on peut utiliser, à titre d'agent d'enrobage, un sel d'au moins un acide inorganique de métal alcalin.

De préférence, on sélectionnera les acides inorganiques parmi les acides forts. Les acides chlorhydrique et sulfurique ont donné d'excellents résultats, en particulier pour les sels chlorure de sodium et sulfate de sodium.

D'autres acides inorganiques intéressants sont les acides carbonique, tétraborique et silicique, en particulier pour les sels carbonate de sodium, borax et silicate de sodium.

Les agents d'enrobage peuvent, selon l'invention, être introduits séparément dans la cuve de post-cristallisation. Ils peuvent aussi, en variante, être introduits dans la cuve de post-cristallisation en mélange avec la suspension des particules de persels. Selon cette variante, les agents d'enrobage peuvent provenir de la cuve de cristallisation.

Une autre variante intéressante est d'utiliser, comme agent d'enrobage, l'agent de relargage qui peut être présent dans les eaux-mères de cristallisation de la suspension des particules de persels qui entrent dans la cuve de post-cristallisation. Les eaux-mères de cristallisation contiennent notamment un tel agent de relargage lorsque la cristallisation a été effectuée par la technique de précipitation à l'aide de l'adjonction d'un ion commun (technique de relargage ou de "salting out").

La température et la pression de l'étape de post-cristallisation doivent être adaptées pour que la solution aqueuse devienne légèrement sursaturée par rapport à l'agent d'enrobage.

On travaille généralement, pour des raisons de commodité, à la pression atmosphérique.

Un mode de réalisation avantageux du procédé selon l'invention consiste à alimenter la cuve de post-cristallisation avec une solution aqueuse de l'agent d'enrobage dont la concentration est proche de la saturation à une température supérieure de un à deux °C à celle qui règne dans la cuve de post-cristallisation et à extraire en continu des calories hors de la cuve de post-cristallisation de façon à sursaturer la solution à la température contrôlée de ladite cuve.

Selon une première variante de l'invention, on sélectionne une température de la cuve de post-cristallisation identique à celle qui règne dans le cristalliseur disposé en amont.

Selon une deuxième variante de l'invention, on règle la température de la cuve de post-cristallisation à une valeur inférieure à celle qui règne dans le cristalliseur disposé en amont.

De préférence, on règle la température de la cuve de post-cristallisation à une valeur inférieure d'au moins 5 °C à celle régnant dans le cristalliseur. De manière particulièrement préférée, on règle la température de la cuve de post-cristallisation à une valeur inférieure d'au moins 10 °C à celle régnant dans le cristalliseur.

La cuve de post-cristallisation conforme au procédé selon l'invention comporte généralement un dispositif capable de refroidir la solution aqueuse séjournant dans la cuve. Tous les dispositifs connus d'échange de chaleur dans les réacteurs chimiques conviennent. On peut, par exemple, équiper la cuve d'un serpentin plongeant dans la solution aqueuse et parcouru par un fluide froid dont le rôle est de capter des calories de la cuve. On peut aussi, en variante, équiper la cuve d'une double paroi dans laquelle on fait circuler le fluide froid.

Comme fluide froid, on peut utiliser les fluides caloporteurs utilisés dans l'industrie du froid ou une saumure refroidie. De bons résultats ont été obtenus avec une saumure de NaCl refroidie.

Lorsque l'on utilise un agent d'enrobage introduit séparément dans la cuve de post-cristallisation, on peut, si nécessaire, refroidir ladite cuve à une température inférieure à celle de la cuve de cristallisation, afin de rechercher les conditions optimales de précipitation des agents d'enrobage autour des particules de persels.

Lorsque la nature des agents d'enrobage l'autorise, il est parfois possible, néanmoins, de travailler dans la cuve de post-cristallisation à la même température que dans la cuve de cristallisation.

En revanche, lorsque l'on utilise, comme agent d'enrobage, l'agent de relargage présent dans les eaux-mères accompagant les particules de persel, il est généralement indiqué d'opérer à une température plus basse que celle de la cuve de cristallisation, afin de favoriser la précipitation dudit agent d'enrobage autour des particules de persel.

Les exemples qui suivent sont donnés dans le but d'illustrer l'invention, sans pour autant en limiter sa portée.

Dans tous ces exemples, il est fait mention d'une valeur de la stabilité du persel dans une base détergente. Cette mesure a consisté à mélanger à sec une proportion de 10 % en poids du persel testé avec 90 % en poids d'une poudre détergente de base dont l'analyse a été la suivante :

| | |
|---|---|
| détergents anioniques, g/kg | 199 |
| carbonate, g/kg | 97,3 |
| composés de B solubles, g B/kg | < 0,03 |
| composés de Si solubles, g Si/kg | 10 |
| composés de S solubles, g S/kg | 55 |
| composés de P solubles, g P/kg | 2,8 |
| détergents non ioniques, g/kg | 22 |
| Nonanoyloxybenzenesulfonate, g/kg | 13 |
| Sulfate, g SO₄ /kg | 143 |

Le mélange obtenu présentait un titre en oxygène actif voisin de 1,5 % (déterminé par iodométrie).

Plusieurs échantillons de chaque mélange à tester ont ensuite été introduits dans des boîtes en carton laminé à la cire d'environ 120 ml de capacité. Les boîtes ont été remplies environ à moitié avec 50 g de mélange. Chaque boîte a été scellée et stockée dans un environnement thermostatisé à 32 °C et où régnait une humidité relative de 80 %.

On a ensuite déterminé l'oxygène actif résiduel au terme de diverses périodes de stockage. Les valeurs de stabilité mentionnées plus loin correspondent à la teneur en oxygène actif résiduel exprimée en mole % de la teneur initiale en début de stockage.

### Exemple 1R (non conforme à l'invention)

On a fabriqué du carbonate de sodium peroxyhydraté (PCS ou "percarbonate" de sodium, 2Na₂CO₃.3H₂O₂) dans un cristalliseur-classificateur à partir d'une solution de peroxyde d'hydrogène contenant des adjuvants de cristallisation et d'une solution de carbonate de sodium contenant des stabilisants et un agent de relargage, dans les conditions opératoires suivantes :

| Paramètres | Conditions opératoires |
|---|---|
| Température de cristallisation, °C | 30 |
| Concentration de la solution de H₂O₂, g H₂O₂/100g solution | 32 |
| Concentration de la solution de Na₂CO₃, g Na₂CO₃/100g solution | 25 |
| Agent de relargage : | |
| nature | Na₂SO₄ |
| concentration, g/100g solution | 9 |
| Stabilisants, g/kg Na₂CO₃ : | |
| silicate de sodium | 40 |
| DEQUEST® 2010 | 1,4 |
| Adjuvants de cristallisation, g/kg Na₂CO₃ : | |
| Na polyacrylate | 2,6 |
| Na₄P₂O₇ | 7,5 |

Le PCS obtenu à la sortie du cristalliseur-classificateur a ensuite été essoré dans une essoreuse industrielle de la firme KRAUSS-MAFFEI de type HZ25 de 2,5 dm³ de volume de panier. L'essorage du PCS y a été effectué en régime semi-continu de la manière suivante :
- entrée de 1 à 1,5 l de slurry de PCS (250-450 g de solide) et d'eaux mères dans le panier en rotation (2 000 tours/min.)
- essorage à 2 000 tours/min. pendant 80 à 90 s.
- réduction de la vitesse de rotation du panier à 400 tours/min.
- coupe du gâteau à l'aide d'un couteau et décharge du PCS essoré à 8-12 % en poids d'humidité
- augmentation de la vitesse de rotation du panier à 2 000 tours/min.
- nouveau cycle de remplissage, essorage, décharge et ainsi de suite.

Le PCS essoré a ensuite été séché en continu (débit 6 à 8 kg/h) dans un lit fluidisé cylindrique de 1,4 dm³ (diamètre : 1,5 dm) parcouru par un courant d'air chaud de débit de 30 à 40 m³/h à 110-120 °C.

La température dans le lit fluidisé était de 65-70 °C et le temps de séjour moyen du PCS a été de 10 à 20 min.

Le produit obtenu présentait les caractéristiques suivantes :

| Paramètres | Caractéristiques du produit |
|---|---|
| O₂ actif, g/100g | 14,4 |
| Masse spécifique apparente, kg/l | 0,83 |
| Diamètre moyen, µm | 900 |
| Vitesse de dissolution, % | 94 |
| Stabilité en base détergente, % | 60,4 |

La vitesse de dissolution a été déterminée par la méthode suivante : Dans un volume d'eau déminéralisée de 1000 ml maintenu à 15 °C ± 1 °C dans un bécher de 2 l, on plonge un agitateur en acier inoxydable à 2 pales verticales de 42 mm de long et de 11 mm de hauteur disposées à angle droit et on le fait tourner à la vitesse contrôlée de 350 tours/min ± 10 tours/min. On introduit ensuite 2 g ± 0,01 g d'échantillon de PCS enrobé dans le bécher et on démarre immédiatement à cet instant précis un chronomètre. On note ensuite la conductivité de la solution toutes les minutes pendant 5 minutes ainsi que la conductivité après 15 minutes d'agitation. Par ailleurs, on trace une courbe d'étalonnage en relevant la conductivité mesurée après 15 minutes d'agitation des quantités suivantes de PCS enrobé : 1,0; 1,5; 2,0 et 2,5 g. En reportant la conductivité de l'échantillon mesurée après 2 minutes sur la courbe d'étalonnage, on en déduit le poids de PCS dissous. La vitesse de dissolution conventionnelle après 2 minutes d'agitation s'obtient ensuite en rapportant le poids de PCS dissous à celui du total de l'échantillon mis en oeuvre et s'exprime en %.

### Exemples 2 à 4 (conformes à l'invention)

On a intercalé, dans la fabrication du percarbonate de sodium décrite à l'exemple 1R, une étape de post-cristallisation entre l'étape de cristallisation et l'étape de centrifugation. Les conditions de cette étape de post-cristallisation ont été les suivantes :

| Paramètres | Exemple 2 | Exemple 3 | Exemple 4 |
|---|---|---|---|
| Agent d'enrobage introduit à la post-cristallisation : | | | |
| NaCl, g/l | 110 | 130 | néant |
| Na₂CO₃, g/l | 120 | - | néant |
| température, °C | 10 | 20 | 5,00 |

Les résultats de l'examen des produits enrobés ont été les suivants :

| Paramètres | Exemple 2 | Exemple 3 | Exemple 4 |
|---|---|---|---|
| O₂ actif, g/100g | 12,6 | 12,8 | 13,9 |
| Teneur en Na₂SO₄, g/100g | 9,8 | 8,6 | 7,2 |
| Teneur en NaCl, g/100g | 2,3 | 3,3 | 0,0 |
| Masse spécifique apparente, kg/l | 0,92 | 0,91 | 0,91 |
| Diamètre moyen, µm | 970 | 800 | 900 |
| Vitesse de dissolution, % | 81,0 | 80,3 | 88,0 |
| Stabilité en base détergente, % | 70,4 | 77,1 | 77,7 |

## Revendications

1. Procédé continu pour la fabrication de particules enrobées d'au moins un persel d'au moins un métal alcalin selon lequel
a) dans une première étape, on fait cristalliser en continu une solution aqueuse sursaturée de persel dans une cuve de cristallisation pour obtenir une suspension de particules cristallines de persel,
b) dans une deuxième étape, on transfère la suspension de particules cristallines de persel provenant de la cuve de cristallisation dans une cuve agitée, appelée cuve de post-cristallisation,
c) dans une troisième étape, on introduit dans ladite cuve de post-cristallisation au moins un agent d'enrobage dont la concentration est inférieure à la saturation,
d) dans une quatrième étape, on réalise une cristallisation dudit agent d'enrobage à la surface des particules de persel dans des conditions réglées de température et d'agitation pour recouvrir les particules de persel d'une couche d'agent d'enrobage la plus uniforme possible qui les isole du monde extérieur,
e) et dans une cinquième étape, on soumet les particules cristallines enrobées obtenues à l'étape d) à une centrifugation et un séchage,
caractérisé en ce que la quantité d'agent d'enrobage introduite à l'étape c) est supérieure à 100 g/l.

2. Procédé selon la revendication 1, caractérisé en ce qu'on effectue la cristallisation dans la première étape en présence d'au moins un agent de relargage, la concentration dudit agent de relargage dans le cristalliseur étant inférieure à la concentration de saturation.

3. Procédé selon la revendication 2, caractérisé en ce que les eaux-mères de la suspension de particules de persels obtenues à la suite de la première étape de cristallisation qui contiennent l'agent de relargage sont introduites dans la deuxième étape dans la cuve de post-cristallisation.

4. Procédé selon l'une quelconque des revendications 1 à 3, caractérisé en ce que la température régnant dans la cuve de post-cristallisation est inférieure à celle régnant à l'étape de cristallisation.

5. Procédé selon la revendication 4, caractérisé en ce que la température régnant dans la cuve de post-cristallisation est inférieure d'au moins 5 °C à celle régnant à l'étape de cristallisation.

6. Procédé selon l'une quelconque des revendications 1 à 5, caractérisé en ce que l'on sélectionne l'agent d'enrobage parmi les sels d'au moins un acide inorganique de métal alcalin.

7. Procédé selon la revendication 6, caractérisé en ce que l'acide inorganique est un acide fort.

8. Procédé selon la revendication 7, caractérisé en ce que l'acide fort est l'acide chlorhydrique ou l'acide sulfurique.

9. Procédé selon la revendication 6, caractérisé en ce que l'acide inorganique est l'acide carbonique, l'acide tétraborique ou l'acide silicique.

10. Procédé selon l'une quelconque des revendications 2 à 9, caractérisé en ce que l'agent d'enrobage est l'agent de relargage présent dans les eaux-mères accompagnant la suspension de persel entrant dans la cuve de post-cristallisation.

## Claims

1. Continuous process for the manufacture of coated particles of at least one persalt of at least one alkali metal, according to which,
a) in a first stage, a supersaturated aqueous persalt solution is continuously crystallized in a crystallisation vessel in order to obtain a slurry of crystalline persalt particles,
b) in a second stage, the suspension of the crystalline persalt particles arising from the crystallization vessel are transferred into a stirred vessel, known as the postcrystallization vessel,
c) in a third stage, at least one coating agent is introduced into the said post-crystallization vessel, the concentration of the coating agent being lower than saturation,
d) in a fourth stage, the said coating agent is crystallised at the surface of the persalt particles under controlled temperature and stirring conditions in order to cover the persalt particles with as uniform a layer as possible which isolates them from the outer world,
e) and in a fifth stage, the crystalline coated particles obtained in stage d) are subjected to centrifuging and to drying, characterized in that the quantity of coating agent introduced in stage c) is higher than 100 g/l.

2. Process according to Claim 1, characterised in that the crystallisation in the first stage is carried out in the presence of at least one salting-out agent, the concentration of said salting-out agent in the crystallisation vessel being lower than its saturation concentration.

3. Process according to Claim 2, characterised in that the mother liquors of the slurry of persalt particles obtained at the end of the first crystallisation stage, which contain the salting-out agent, are introduced in the second stage in the post-crystallisation vessel.

4. Process according to any preceding Claim 1 to 3, characterized in that the temperature prevailing in the post-crystallization vessel is below that prevailing in the crystallization stage.

5. Process according to Claim 4, characterized in that the temperature prevailing in the post-crystallization vessel is at least 5°C below that prevailing in the crystallization stage.

6. Process according to any one of Claims 1 to 5, characterized in that the coating agent is selected from the alkali metal salts of at least one inorganic acid.

7. Process according to Claim 6, characterized in that the inorganic acid is a strong acid.

8. Process according to Claim 7, characterized in that the strong acid is hydrochloric acid or sulphuric acid.

9. Process according to Claim 6, characterized in that the inorganic acid is carbonic acid, tetraboric acid, or silicic acid.

10. Process according to any one of Claims 2 to 9, characterized in that the coating agent is the salting-out agent present in the mother liquors which accompany the persalt suspension entering into the post-crystallization vessel.

## Patentansprüche

1. Kontinuierliches Verfahren zur Herstellung von beschichteten Teilchen von wenigstens einem Persalz wenigstens eines Alkalimetalls, gemäß dem
a) man in einem ersten Schritt eine übersättigte wässrige Persalzlösung in einem Kristallisationsbehälter kontinuierlich kristallisieren lässt, um eine Suspension von kristallinen Persalzteilchen zu erhalten,
b) man in einem zweiten Schritt die Suspension von kristallinen Persalzteilchen, die aus dem Kristallisationsbehälter stammt, in einen gerührten Behälter, Nachkristallisationsbehälter genannt, überführt,
c) man in einem dritten Schritt in besagten Nachkristallisationsbehälter wenigstens ein Beschichtungsmittel, dessen Konzentration niedriger als bei der Sättigung ist, einführt,
d) man in einem vierten Schritt eine Kristallisation besagten Beschichtungsmittels auf der Oberfläche der Persalzteilchen unter eingestellten Temperatur- und Rührbedingungen durchführt, um die Persalzteilchen mit einer möglichst einheitlichen Schicht von Beschichtungsmittel zu bedecken, die sie nach außen isoliert,
e) und man in einem fünften Schritt die in Schritt d) erhaltenen beschichteten kristallinen Teilchen einer Zentrifugation und einem Trocknen unterzieht,
dadurch gekennzeichnet, dass die in Schritt c) eingeführte Menge an Beschichtungsmittel größer als 100 g/l ist.

2. Verfahren gemäß Anspruch 1, dadurch gekennzeichnet, dass man die Kristallisation im ersten Schritt in Gegenwart wenigstens eines Aussalzmittels ausführt, wobei die Konzentration besagten Aussalzmittels im Kristallisator kleiner als die Sättigungskonzentration ist.

3. Verfahren gemäß Anspruch 2, dadurch gekennzeichnet, dass die nach dem ersten Kristallisationsschritt erhaltenen Mutterlaugen der Persalzteilchensuspension, die das Aussalzmittel enthalten, im zweiten Schritt in den Nachkristallisationsbehälter eingeführt werden.

4. Verfahren gemäß einem der Ansprüche 1 bis 3, dadurch gekennzeichnet, dass die im Nachkristallisationsbehälter herrschende Temperatur niedriger ist als die, die beim Kristallisationsschritt herrscht.

5. Verfahren gemäß Anspruch 4, dadurch gekennzeichnet, dass die im Nachkristallisationsbehälter herrschende Temperatur wenigstens 5 °C niedriger ist als die, bei beim Kristallisationsschritt herrscht.

6. Verfahren gemäß einem der Ansprüche 1 bis 5, dadurch gekennzeichnet, dass man das Beschichtungsmittel unter den Alkalimetallsalzen wenigstens einer anorganischen Säure auswählt.

7. Verfahren gemäß Anspruch 6, dadurch gekennzeichnet, dass die anorganische Säure eine starke Säure ist.

8. Verfahren gemäß Anspruch 7, dadurch gekennzeichnet, dass die starke Säure Salzsäure oder Schwefelsäure ist.

9. Verfahren gemäß Anspruch 6, dadurch gekennzeichnet, dass die anorganische Säure Kohlensäure, Tetraborsäure oder Kieselsäure ist.

10. Verfahren gemäß einem der Ansprüche 2 bis 9, dadurch gekennzeichnet, dass das Beschichtungsmittel das Aussalzmittel ist, das in den Mutterlaugen, die die in den Nachkristallisationsbehälter eintretende Persalzsuspension begleiten, vorhanden ist.
